# EUROPEAN PATENT APPLICATION

(11) **EP 0 606 933 A1**
(43) Date of publication of application: **20.07.1994**
(21) Application number: 94200012.6
(22) Date of filing: 05.01.1994
(51) Int. Cl.: B01D 69/10

(54) **Composite tube for membrane filtration**

(30) Priority: 14.01.1993 NL 9300072
(71) Applicant: STORK FRIESLAND B.V., NL-8401 DT Gorredijk (NL)
(72) Inventor: Rekers, Casper Johannes Nicolaas, NL-7772 JV Hardenberg (NL); Schonewille, Hendrik, NL-8409 CK Hemrik (NL)
(74) Representative: van der Kloet-Dorleijn, Geertruida W.F., Drs.

(57) **Abstract**

The invention relates to a composite tube for membrane filtration, comprising a finished tube or hollow-fibre tube which is suitable for membrane filtration and which, on the outside, is provided at least locally with reinforcing means, said reinforcing means consisting of a seamless tube which fits around the membrane filtration tube in a gripping manner and is made of liquid-permeable reinforcing material. More in particular, said reinforcing material consists of a knitted, woven or braided material, formed from glass fibres, aramid fibres, carbon fibres or combinations thereof. The tube of reinforcing material is expediently bonded to the finished membrane filtration tube by means of a thermosetting resin. The liquid permeability of the reinforcing material is preferably greater than or equal to that of the membrane filtration tube. A composite tube for membrane filtration according to the invention is found, in practice, to have a very long, effective service life. Moreover it is now possible to use tubes having a smaller internal diameter at acceptable costs.

## Description

The invention relates to a composite tube for membrane filtration, comprising a finished tube or hollow-fibre tube which is suitable for membrane filtration and which, on the outside, is provided at least locally with reinforcing means.

Such a tube is disclosed by the Dutch Patent Application 72.14986 and consists, more in particular, of a fibre-web tube which on its outside is wrapped with one or more reinforcing wires or strips which are bonded, at least locally, to the outside of the fibre web. Said reinforcing wires can run helically or approximately perpendicular to the axis of the fibre-web tube. The drawback of such a reinforced tube is, however, that insufficient strength is obtained in the axial direction.

It is further known to introduce membrane tubes into an outermost reinforcing tube which is formed from PVC or stainless steel and is porous or perforated. A reinforcing tube of this type is difficult to use for membrane tubes having a relatively small diameter. Moreover, the manufacturing costs are high.

A composite tube for membrane filtration has now been found, which does not have the abovementioned drawbacks and is suitable for any tube diameter.

The invention therefore relates to a composite tube for membrane filtration of the type mentioned in the preamble, which is characterized in that the reinforcing means consist of a seamless tube which fits around the membrane filtration tube in a gripping manner and is made of liquid-permeable reinforcing material.

According to the invention it is likewise possible to reinforce membrane tubes which are not made of fibre web or are armoured in a different way and have a small internal diameter of, for example, 2 mm.

Preferably, the tube of liquid-permeable reinforcing material consists of a knitted, woven or braided material. As a result of such a tube being seamless, furthermore, high strength is obtained in the axial direction.

It should be noted that it has become possible, by means of the reinforcing tube, to use tubes having a smaller internal diameter at acceptable costs. When using smaller-diameter membrane tubes, the membrane modules which can be manufactured therefrom become more compact. Thus, for example, use of the reinforcing tube having an internal diameter of 5.2 mm provides a module which is easily six times as compact as a module based on a membrane arranged in a perforated outermost reinforcing tube and having a diameter of 15 mm.

The material of the reinforcing tube can be, for example, an aramid fibre, carbon fibre or glass fibre or a combination thereof. The invention is, however, not limited to these materials, other materials may, obviously, also have been used to manufacture the reinforcing tubes.

The tube of reinforcing material preferably, however, consists of a glass-fibre tube.

It should be noted that it is known per se to provide a porous tube of braided glass fibres on the inside with a polymer solution and then to let the polymer coagulate to form a membrane.

Fabrication in such a way is labour-intensive, however, and uniform thickness of the membrane layer is virtually impossible to achieve in the process.

It should further be noted that wrapping a tube suitable for membrane filtration with glass fibres has the drawback that insufficient strength is obtained in the axial direction. This effect may become even more marked if, owing to vibration as a result of pressure fluctuations, the glass fibres shift with respect to one another. Irreversible displacement of the glass fibres may, incidentally, also occur as a result of radial expansion of the membrane tube. Drawbacks of this type are found, surprisingly, to be completely overcome by a seamless reinforcing tube according to the invention.

Expediently, the liquid permeability of the tube of reinforcing material is greater than or equal to that of the membrane filtration tube. Thus the presence of the reinforcing tube will not have an adverse effect on the water permeability of the membrane filtration tube, and the reinforcing tube will have a negligible resistance with regard to the membrane filtration tube. Preferably, the water permeability of the reinforcing tube is in the range from 100 to 10,000 l/m²/hour/bar and is expediently approximately 1000 l/m²/hour/bar.

It should be noted that the thickness of the tube of reinforcing material expediently is as small as possible, and that the wall thickness of the tube depends on the fibre material used and on the operating pressure required for the application.

It is thus possible, for example when using glass fibre, to attain an operating pressure above 120 bars with a wall thickness of less than 2 mm.

According to a preferred embodiment of a composite tube according to the invention, the tube of reinforcing material is bonded to the membrane tube by means of a thermosetting resin. Thus, a complete force fit of the reinforcing tube on the tube suitable for membrane filtration can be ensured, by means of which the occurrence of any play between the two tubes is prevented. It is known of the system in which a loose membrane tube is introduced into an outermost reinforcing tube that a play, usual for that type of system, of only 0.1-0.2 mm results in premature breakdown of the membrane filtration tube. The reinforcing tube according to the invention in contrast ensures a very long, effective service life for membrane filtration tubes. Of course the thermosetting resin must be arranged in such a way that the water permeability of the composite tube is not significantly affected. Preferably, the thermosetting resin is an epoxy resin; it goes without saying that the invention is not limited thereto.

It should be noted that the invention can be applied to any type of membrane filtration tube, i.e. to tubes which are suitable for microfiltration, ultrafiltration, nanofiltration and reverse osmosis.

Membrane filtration tubes of this type serve for the separation of various substances and consequently must withstand various pressures required for the separation in question. More in particular, a membrane filtration tube must be able to withstand a pressure up to approximately 3 atm. for microfiltration, up to approximately 12 atm. for ultrafiltration, up to approximately 20 atm. for nanofiltration, and up to approximately 80 atm., preferably even up to 120 atm., for reverse osmosis. As has been explained hereinabove, a composite tube according to the invention meets such a specification completely and over a long time.

The invention further relates to a composite tube for membrane filtration which is characterized in that the membrane filtration tube is provided on the inside with a membrane layer. Said membrane layer is, of course, of a kind required for the intended separation type and is preferably formed from a polymer or ceramic material or combinations thereof suitable for membrane filtration.

Examples of suitable polymers are polysulphone, polyethersulphone, polyetherketone, poly-2,6-dimethyl-1,4-phenylene oxide and derivatives thereof, polyetherimide, polyamides, polyimides, poly(vinylidene fluoride) etc.

Examples of ceramic materials are aluminium oxides, zirconium oxides etc.

From the exposition given above it will be clear to those skilled in the art that the invention is suitable, in particular, both for tubular membranes, on a support or not on a support, and membranes in the form of a hollow fibre, without a support.

The invention will now be explained in more detail with reference to several examples and an illustrative embodiment with the aid of the drawing, in which:
- - Figure 1: shows, in diagrammatic form, the design of a composite tube according to the invention,
- - Figure 2: shows, in diagrammatic form, a cross-section through a membrane filtration tube to be reinforced, and
- - Figure 3: shows a cross-section through a hollow fibre tube.

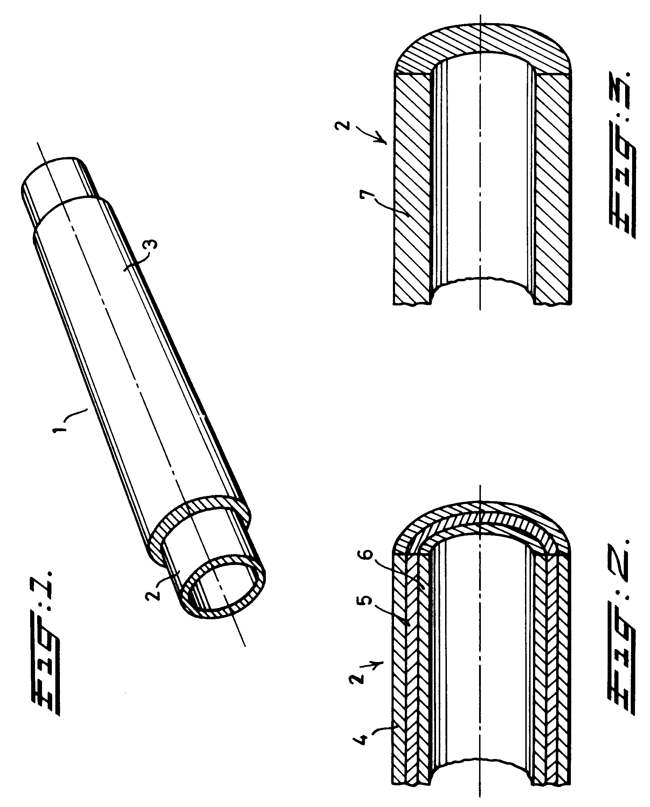

Figure 1 shows, in diagrammatic form, a composite tube 1, reinforced according to the invention, for membrane filtration. More in particular, said composite tube consists of a finished tube 2, known per se, for membrane filtration, as depicted in more detail in Figures 2 and 3, which is enveloped in a gripping manner by the seamless reinforcing tube 3. Owing to the gripping envelopment there is no play at all between the tubes 2 and 3, as a result of which the risk of premature rupture of the membrane filtration tube 2 can be minimized. The reinforcing tube 3 may consist of a knitted, woven or braided reinforcing material such as an aramid fibre, carbon fibre or glass fibre. It will be clear to those skilled in the art that this enumeration is not limitative; other materials which can be formed into a seamless tube and have sufficient strength and porosity can obviously likewise be used. By providing the reinforcing tube 3 with an impregnation, in particular with a thermosetting resin such as, for example, an epoxy resin or a polyurethane resin, a composite tube having even greater strength is obtained. A composite tube provided with impregnation is eminently satisfactory at pressures of approximately 130 bars. It should be noted that the reinforcing tube 3 has a negligible resistance, perpendicular to the membrane surface, with respect to the membrane filtration tube 2. The water permeability of tube 3 is in the range from 100 to 10,000 l/m²/hour/bar, and is normally approximately 1000 l/m²/hour/bar.

Figure 2 depicts, in diagrammatic form, a section through a membrane filtration tube 2 provided with a support. More in particular, tube 2 is, for example, a textile tube, consisting of an outermost layer 4 of non-woven polyester and an innermost layer 5 of woven polyester, on which the membrane layer 6 is arranged. The membrane may be formed from, for example, polysulphone, polyethersulphone or polyacrylonitrile or any other polymer suitable for forming membranes.

It is, however, likewise possible to use, as a finished tube to be reinforced, for membrane filtration, a (spun) hollow-fibre tube as depicted in Figure 3.

Such a tube consists exclusively of the polymer material 7 employed for the membrane and does not have a support. According to the invention it is now possible to make hollow-fibre membrane tubes having a larger diameter while retaining the strength required for the membrane filtration process.

Owing to the greater strength and longer lifetime obtainable of the composite tubes according to the invention, said tubes are suitable, in particular, in the case of nanofiltration and reverse-osmosis processes.

### EXAMPLE I

In this example, a textile tube was used, consisting of an outermost layer of non-woven polyester and an innermost layer of woven polyester on which a membrane layer of polysulphone was disposed. Said membrane filtration tube had an internal diameter of 5.2 mm. The membrane type used was suitable for reverse osmosis. The membrane filtration tube as such had insufficient strength for this application, however.

The membrane filtration tube in question was provided, on the outside, with a seamless tube which fitted around the membrane filtration tube in a gripping manner and was made of a glass-fibre fabric having a thickness of 1 mm.

Said glass-fibre tube had a negligible resistance in the transverse direction with respect to the membrane filtration tube to be reinforced. The water permeability of the glass-fibre tube was approximately 1000 l/m²/hour/bar.

The composite tube thus obtained was used for removing water from whey, under an operating pressure of 40-60 bars.

The tube gave way after approximately 1200 pressure swing cycles.

Then an identical composite tube was used, with the difference, however, that the glass fibre tube was provided with an impregnation of a thermosetting resin. This tube was likewise used for removing water from whey, under an operating pressure of 40-60 bars, and in this case survived more than 25,000 pressure swing cycles.

### EXAMPLE II

A composite tube, reinforced according to Example I and impregnated with a thermosetting resin, had oil injected into it under pressure.

In this case, the tube was found to be able to withstand a pressure of more than 178 bars.

### EXAMPLE III

Hollow-fibre tubes having an internal diameter of 2 mm were provided, on the outside, with a seamless tube of an aramid fibre, both tubes fitting each other in a gripping manner. The reinforcing tube of aramid fibres was then bonded to the membrane tube by means of an epoxy resin, in such a way that the porosity of the hollow-fibre tube was not changed. The use as a membrane for reverse osmosis in the desalination of sea water showed that the composite tube readily survived at least 20,000 cycles of 60 bar and did not show any cracks.

## Claims

1. Composite tube (1) for membrane filtration, comprising a finished tube or hollow-fibre tube (2) which is suitable for membrane filtration and which, on the outside, is provided at least locally with reinforcing means **characterized in that** the reinforcing means consist of a seamless tube (3) which fits around the membrane filtration tube (2) in a gripping manner and is made of liquid-permeable reinforcing material.

2. Composite tube (1) for membrane filtration according to claim 1, **characterized in that** the tube (3) of liquid-permeable reinforcing material consists of a knitted, woven or braided material.

3. Composite tube (1) for membrane filtration according to claim 1 or 2, **characterized in that** the reinforcing material of the tube consists of glass fibres, aramid fibres or carbon fibres or combinations thereof.

4. Composite tube (1) for membrane filtration according to one or more of claims 1 to 3, **characterized in that** the liquid permeability of the tube (3) of reinforcing material is greater than or equal to that of the membrane filtration tube (2).

5. Composite tube (1) for membrane filtration according to one or more of claims 1 to 4, **characterized in that** the combination of wall thickness of the reinforcing tube (3) and choice of the reinforcing material is such that the composite tube (1) can withstand a pressure of at least 2 × the operating pressure required for the application.

6. Composite tube (1) for membrane filtration according to claim 5, **characterized in that** the tube (3) of reinforcing material has a wall thickness of less than 2 mm.

7. Composite tube (1) for membrane filtration according to one or more of claims 1 to 6, **characterized in that** the tube (3) of reinforcing material is bonded to the membrane tube (2) by means of a thermosetting resin.

8. Composite tube (1) for membrane filtration according to claim 7, **characterized in that** the thermosetting resin is an epoxy resin, polyurethane resin or polyester resin.

9. Composite tube (1) for membrane filtration according to one or more of claims 1 to 8, **characterized in that** the membrane filtration tube (2) is a composite tube (4, 5) which on its inside is provided with a membrane layer (6).

10. Composite tube (1) for membrane filtration according to one or more of claims 1 to 8, **characterized in that** the membrane filtration tube (2) is a hollow-fibre tube.

11. Composite tube (1) for membrane filtration according to claim 9, **characterized in that** the membrane layer (6) is formed from a suitable polymer or combination of polymers.

12. Composite tube (1) for membrane filtration according to claim 9, **characterized in that** the membrane layer (6) consists of a suitable ceramic material or a combination of such materials.

13. Composite tube (1) for membrane filtration according to claim 9, **characterized in that** the membrane layer (6) consists of a combination of one or more polymers with one or more ceramic materials.
